(19) Europäisches Patentamt
European Patent Office
Office européen des brevets

(11) EP 0 821 054 B1

(12) EUROPÄISCHE PATENTSCHRIFT

(45) Veröffentlichungstag und Bekanntmachung des Hinweises auf die Patenterteilung:
**03.04.2002 Patentblatt 2002/14**

(51) Int Cl.[7]: **C11D 3/37**, C02F 5/12, B01F 17/22, A01N 37/32, C23F 11/173, C08G 69/10, C08G 73/06

(21) Anmeldenummer: **97118624.2**

(22) Anmeldetag: **13.12.1993**

(54) **Verwendung von Polyasparaginsäure und ihrer Salze**

Use of polyaspartic acids and their salts

Utilisation d'acides polyaspartiques et de leurs sels

(84) Benannte Vertragsstaaten:
**BE DE ES FR GB IT NL**

(30) Priorität: **24.12.1992 DE 4244031**

(43) Veröffentlichungstag der Anmeldung:
**28.01.1998 Patentblatt 1998/05**

(62) Dokumentnummer(n) der früheren Anmeldung(en) nach Art. 76 EPÜ:
**93120055.4 / 0 604 813**

(73) Patentinhaber: **BAYER AG**
**51368 Leverkusen (DE)**

(72) Erfinder:
- **Groth, Torsten, Dr.**
  **51519 Odenthal (DE)**
- **Joentgen, Winfried, Dr.**
  **51067 Köln (DE)**
- **Linden, Hans Werner, Dr.**
  **51519 Odenthal (DE)**
- **Müller, Nikolaus, Dr.**
  **40789 Monheim (DE)**
- **Rother, Heinz-Joachim, Dr.**
  **47803 Krefeld (DE)**
- **Wagner, Paul, Dr.**
  **40597 Düsseldorf (DE)**
- **Kugler, Martin, Dr.**
  **42799 Leichlingen (DE)**

(56) Entgegenhaltungen:
**EP-A- 0 454 126**
**WO-A-91/12354**
**US-A- 3 846 380**
**US-A- 4 957 704**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft die Verwendung von Polyasparaginsäure und ihrer Salze als Korrosionsinhibitor ausgenommen für Eisenmetalle.

Die Herstellung und Verwendung von Polyasparaginsäure (PAS) und ihrer Derivate ist seit langem Gegenstand zahlreicher Veröffentlichungen und Patente.

Aus WO 91/12354 ist die Verwendung von PAS als Korrosionsinhibitor für Eisenmetalle bekannt.

Die Erfindung betrifft die Verwendung von Polysuccinimid und von Polyasparaginsäure und ihren Salzen als Korrosionsinhibitor ausgenommen für Eisenmetalle, insbesondere für Messing.

Das erfindungsgemäß verwendete Polysuccinimid enthält wiederkehrende Einheiten folgender Formel

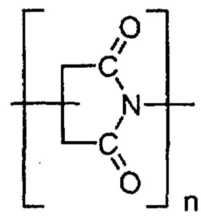

Im erfindungsgemäß verwendeten Polysuccinimid bzw. in der erfindungsgemäß hergestellten Polyasparaginsäure sind bei geeigneter Reaktionsführung wiederkehrende

a) Asparaginsäure-Einheiten der Formel

β-Form

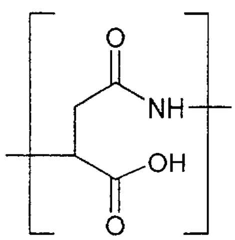

und

α-Form

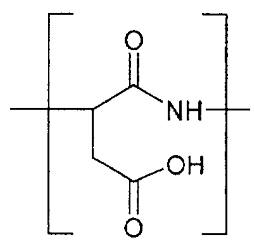

enthalten, wobei im allgemeinen wenigstens 50 %, vorzugsweise wenigstens 70 % der PAS-Einheiten in der β-Form vorliegen.

Weiterhin können bei geeigneter Reaktionsführung und Wahl der Edukte weitere wiederkehrende

b) Apfelsäure-Einheiten der Formel

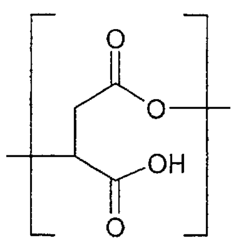

und

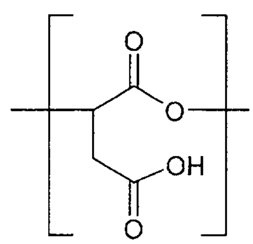

oder

c) Maleinsäure- und Fumarsäure-Einheiten der Formel

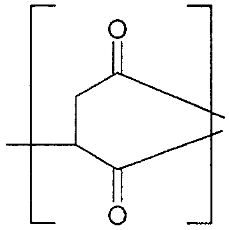

und

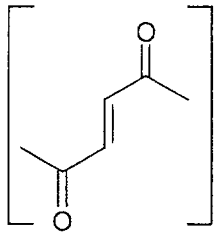

enthalten sein.

Die wiederkehrenden Einheiten b) und c) sind vorzugsweise in einer Menge von 1:1 bis 1:100 bezogen auf die Summe von a) und b) enthalten.

Die Analyse der chemischen Struktur erfolgt vorzugsweise mit $^{13}C$-NMR und nach Totalhydrolyse mit HPLC, GC und GC/MS.

Im unmittelbar bei der Polymerisation oder Hydrolyse enthaltenen Produkt können sowohl die oben angegebenen wiederkehrenden Einheiten a) und b) als auch gleichzeitig die unter $H_2O$-Abspaltung hergestellten Imidstrukturen vorhanden sein.

Das für die erfindungsgemäßen Verwendungen hergestellte Polymer zeigt in Abhängigkeit von den Reaktionsbedingungen z.B. Verweilzeit und Temperatur der thermischen Polymerisation im Konti-Reaktor unterschiedliche Kettenlängen bzw. Molekulargewichte nach gelpermeationschromatographischer Analyse (Mw = 500 bis 10000, bevorzugt 1000 bis 5000, besonders bevorzugt 2000 bis 4000).

Anwendungsbeispiel

1. Prüfung als Korrosionsinhibitor

Blanke und entfettete Messingproben (MS 63) wurden für den Korrosionstest verwendet. Als Testlösung diente künstliches Meerwasser nach ASTM D 665-IP 135, welchem die zu prüfende Substanz zugegeben wurde. Während der Versuchsdauer von 7 Stunden befanden sich die Metallproben vollständig eingetaucht in der 55°C warmen Testlösung, in die ca. 100 ml Luft/min eingeleitet wurde.

Nach dem Test wurden die Metallproben 15 Sekunden lang in halbkonzentrierter Salzsäure gereinigt und mit Wasser und Aceton gewaschen. Vor und nach dem Test wurden die trockenen Metallproben gewogen. Aus dem Massenverlust wurde die prozentuale Schutzwirkung S, bezogen auf eine Blindprobe, berechnet:

$$S = \frac{m - m_1}{m} \times 100,$$

wobei

m = Massenverlust der Metallprobe ohne Inhibitor (Blindprobe),

$m_1$ = Massenverlust der Metallprobe mit Inhibitor

bedeuten.

Die Ergebnisse der prozentualen Schutzwirkung sind in der nachfolgenden Tabelle angegeben:

| Konzentration in mg/l | Schutzwirkung S in % |
|---|---|
| 10 | 9 |
| 25 | 70 |
| 50 | 81 |
| 0 | 0 |

**Patentansprüche**

1. Verwendung von Polyasparaginsäure oder eines Salzes davon als Korrosionsinhibitor ausgenommen für Eisenmetalle.

2. Korrosionsinhibitor ausgenommen für Eisenmetalle, **dadurch gekennzeichnet, dass** diese einen wirksamen Gehalt an Polyasparaginsäure oder eines Salzes davon enthalten.

3. Verfahren zur Verwendung von Korrosion ausgenommen bei Eisenmetallen, **dadurch gekennzeichnet, dass** ein wirksamer Gehalt an Polyasparaginsäure oder eines Salzes davon eingesetzt wird.

4. Verwendung gemäß Anspruch 1, **dadurch gekennzeichnet, dass** die Korrosion von Messing verhindert wird.

5. Verfahren gemäß Anspruch 3, dass dieses an Messing eingesetzt wird.

6. Verfahren gemäß Anspruch 5, **dadurch gekennzeichnet, dass** die Korrosion von Messing in wässrigen Lösungen verhindert wird.

7. Verfahren gemäß Anspruch 6, **dadurch gekennzeichnet, dass** die wässrige Lösung Meerwasser ist.

8. Verwendung gemäß Anspruch 1, **dadurch gekennzeichnet, dass** die Polyasparaginsäire oder ein Salz davon

   a) Asparaginsäure-Einheiten der Formel

β-Form

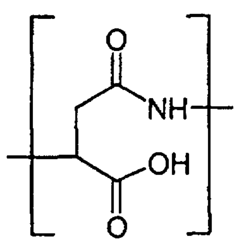

und

α-Form

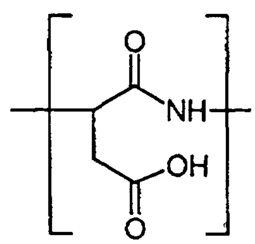

   enthalten, wobei im allgemeinen wenigstens 50 % der PAS-Einheiten in der β-Form vorliegen.

9. Verwendung gemäß Anspruch 1, **dadurch gekennzeichnet, dass** in der Polyasparaginsäure oder einem Salz davon weitere wiederkehrende

   b) Apfelsäure-Einheiten der Formel

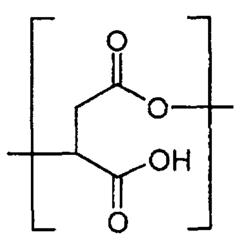

und

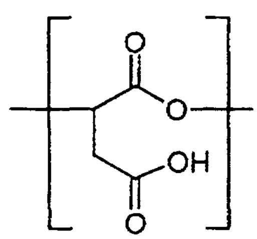

   oder

c) Maleinsäure- und Fumarsäure-Einheiten der Formel

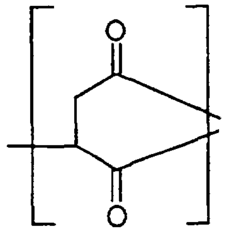

und

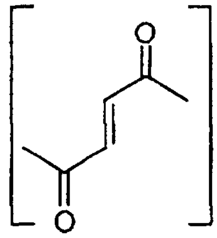

enthalten sind.

## Claims

1. Use of polyaspartic acid or a salt thereof as corrosion inhibitor, except for iron metals.

2. Corrosion inhibitors, except for iron metals, **characterized in that** these contain an active content of polyaspartic acid or of a salt thereof.

3. Process for the use of corrosion inhibitors, except for iron metals, **characterized in that** an effective content of polyaspartic acid or of a salt thereof is employed.

4. Use according to Claim 1, **characterized in that** the corrosion of brass is prevented.

5. Process according to Claim 3, **characterized in that** this is employed on brass.

6. Process according to Claim 5, **characterized in that** the corrosion of brass in aqueous solutions is prevented.

7. Process according to Claim 6, **characterized in that** the aqueous solution is sea water.

8. Use according to Claim 1, **characterized in that** the polyaspartic acid or a salt thereof contains

   a) aspartic acid units of the formula

β form

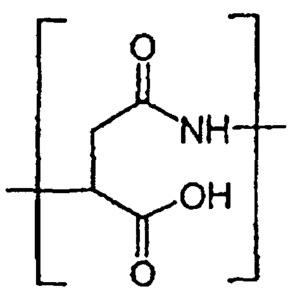

and

α form

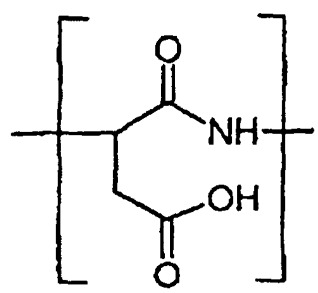

   in which, in general, at least 50% of the PAS units are in the β form.

9. Use according to Claim 1, **characterized in that** the polyaspartic acid or a salt thereof contains further recurring

   b) malic acid units of the formula

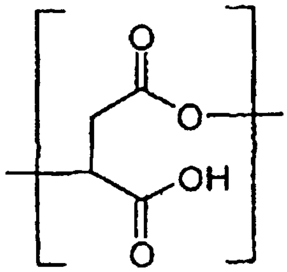

and

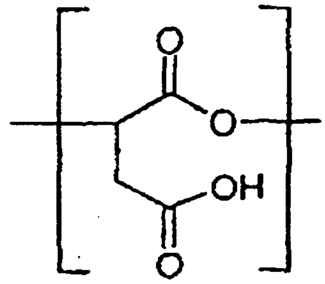

or

c) malic acid and fumaric acid units of the formula

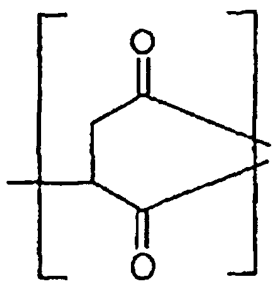

and

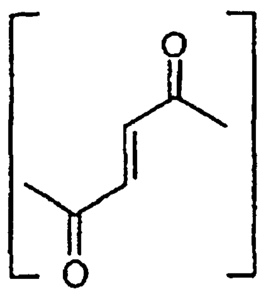

.

## Revendications

1. **1.** Utilisation de poly(acide aspartique) ou d'un sel de celui-ci comme inhibiteur de la corrosion, excepté pour les métaux ferreux.

2. **2.** Inhibiteur de la corrosion, excepté pour les métaux ferreux, **caractérisé en ce qu'**il présente une teneur active en poly(acide aspartique) ou en un sel de celui-ci.

3. **3.** Procédé d'utilisation d'un inhibiteur de la corrosion, excepté pour les métaux ferreux, **caractérisé en ce que** l'on met en oeuvre, une teneur active en poly(acide aspartique ou en un sel de celui-ci.

4. **4.** Utilisation suivant la revendication 1, **caractérisée en ce que** l'on empêche la corrosion du laiton.

5. **5.** Procédé suivant la revendication 3, **caractérisé en ce que** celui-ci est mis en oeuvre sur du laiton.

6. **6.** Procédé suivant la revendication 5, **caractérisé en ce que** l'on empêche la corrosion du laiton dans des solutions

aqueuses.

**7.** Procédé suivant la revendication 6, **caractérisé en ce que** la solution aqueuse est de l'eau de mer.

**8.** Utilisation suivant la revendication 1, **caractérisée en ce que** le poly(acide aspartique) ou un sel de celui-ci contient

a) des unités acide aspartique de formule :

forme β

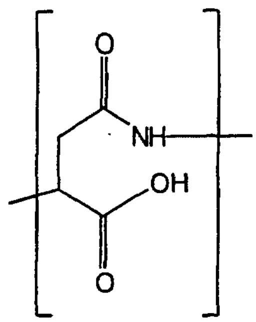

et

forme α

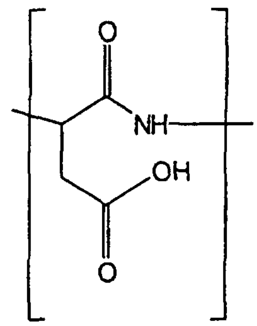

où en général, au moins 50% des unités PAS sont présentes sous la forme β.

**9.** Utilisation suivant la revendication 1, **caractérisée en ce que** dans le poly(acide aspartique) ou un sel de celui-ci, sont présentes d'autres unités récurrentes

b) acide malique de formules

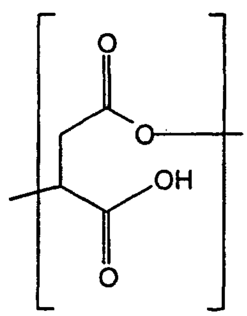

et

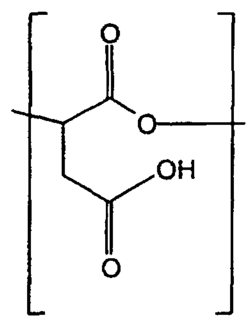

ou

c) acide maléique et acide fumarique de formules

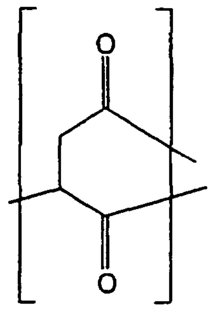

et